(19) Europäisches Patentamt
European Patent Office
Office européen des brevets

(11) EP 1 406 186 A1

(12) **DEMANDE DE BREVET EUROPEEN**

(43) Date de publication:
**07.04.2004 Bulletin 2004/15**

(51) Int Cl.[7]: **G06F 17/30**

(21) Numéro de dépôt: **03292227.0**

(22) Date de dépôt: **11.09.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **02.10.2002 FR 0212208**

(71) Demandeur: **FRANCE TELECOM**
**75015 Paris (FR)**

(72) Inventeur: **Plu, Michel**
**22300 Lannion (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(54) **Système de gestion d'accès à des informations partagées**

(57) Le système gère l'accès à des informations partagées entre des terminaux d'usager (TU, TV) par des étiquettes commentant des documents. Un serveur (SGBD) mémorise des références annotées de document créées par les usagers et contenant des étiquettes. Chaque étiquette comprend une liste d'inclusion pour des usagers autorisés à lire l'étiquette. Un autre serveur (SCP) détermine des facteurs représentatifs de l'intérêt d'une étiquette d'un premier usager pour un deuxième usager ayant une deuxième étiquette avec une liste d'inclusion sans le premier usager afin d'établir des propositions d'inclure des identificateurs d'usager dans des étiquettes à la demande d'usagers. Le système facilite le contrôle de l'accès à des informations qu'un usager a créées par d'autres usagers et répartit équitablement la production et la diffusion d'informations entre usagers.

FIG. 1

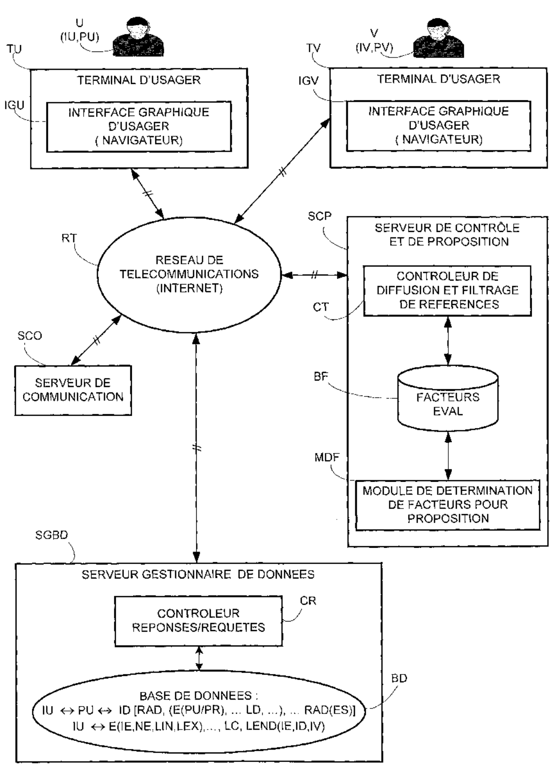


EP 1 406 186 A1

## Description

La présente invention concerne un système pour gérer des échanges d'informations sur des documents entre des terminaux d'usager.

Il est connu de partager et d'échanger des informations principalement selon l'un des trois systèmes de communication suivants :

- un système de partage global des informations dans des forums ou des bases de données ou de documents à accès partagés ;
- un système d'échange en mode "peer to peer" (d'égal à égal) ;
- un système à partage contrôlé d'informations par diffusion de messages à des listes d'usagers.

Les systèmes de partage global d'informations sont principalement :

- des bases d'informations à accès partagés, et
- des systèmes à base de messages partagés appelés forum ou newsgroup.

Dans les systèmes d'accès partagés à des bases de données ou de documents, chaque usager authentifié peut enregistrer des références sur des contenus. Chaque référence est alors le plus souvent accessible à tous.

Les règles d'accès à l'information dans les bases d'informations à accès partagé ne sont définies que par un administrateur qui en général donne un accès total à tous les usagers. Chaque usager a alors des difficultés à filtrer l'information qui l'intéresse réellement. Les usagers parfois filtrent les informations mais avec des critères de filtrage qui sont souvent spécifiques à la base et ne correspondent pas toujours aux critères de l'usager. De plus, la diffusion incontrôlée d'information dissuade des usagers à participer en enregistrant des références.

Un forum est un système de boîtes de messages communes où chaque usager accède à l'ensemble des messages déposés dans le système. Les usagers reçoivent une quantité d'information importante à cause d'une grande quantité d'usagers-participants. La quantité d'information génère un bruit important qui dissimule l'information intéressante noyée dans la grande quantité d'information. Le nombre élevé de participants au forum rend difficile la mémorisation des noms d'usagers par tout usager qui apprécie leurs informations, et l'information devient alors très impersonnelle. Différents mécanismes ont été développés pour permettre à chaque usager de filtrer des messages selon son appréciation des auteurs des messages ou selon la présence de mots particuliers dans le contenu des messages. Ces mécanismes peuvent être basés sur un filtrage collaboratif qui permet à un usager d'exploiter l'appréciation de messages par d'autres usagers. Mais le filtrage de messages comporte les inconvénients suivants :

- le filtrage à base de mots clés est limité par la difficulté d'analyser un texte en langue naturelle, liée principalement à l'ambiguïté et la synonymie des mots. Cette difficulté est d'autant plus grande que les messages sont courts. En effet, peu de mots sont utilisés et de nombreux messages intéressants ne comprennent pas exactement le mot recherché ;
- tout message d'un nouvel usager est systématiquement diffusé à tous les autres usagers participant au forum ; comme il n'y a aucune information sur cet usager, aucun filtrage n'est appliqué ; et
- la production d'une appréciation sur des messages par les usagers est peu motivante puisque même si un usager fournit au début cette appréciation, le retour perceptible sur la qualité du filtrage obtenu est souvent long et peut être décourageant ; une quantité d'information importante doit être fournie comparativement à la diversité des messages publiés et du nombre d'usagers-participants pour que la qualité du filtrage soit satisfaisante.

Indépendamment du bruit perçu à partir de ces forums, d'autres problèmes intrinsèques se posent. Premièrement, les messages étant publiés, leur accès est public. Ainsi un usager dont le terminal envoie un message méconnaît a priori les usagers qui reçoivent le message et donc n'a pas de visibilité sur l'ensemble des usagers qui pourront lire le message. Les usagers n'ont pas de moyen pour restreindre la visibilité de leurs messages publiés. Ceci a par exemple la fâcheuse conséquence de l'exploitation des adresses e-mail pour faire du "spam", dit également "pollupostage", afin d'envoyer des messages qu'un usager n'a pas demandé au moyen d'un moteur de recherche ou la génération aléatoire d'adresse d'e-mail sur des adresses reçues. Cette tendance menace sérieusement l'utilisation des services communautaires de communication, comme les forums. Deuxièmement, la création d'un nouveau forum est effectué par un administrateur du système. Il n'est donc pas aisé pour un usager de créer un nouvel espace d'échange.

Dans un système d'échange en mode "peer to peer", le terminal de chaque usager héberge un serveur de données qui est en général interrogé par un serveur central qui reçoit des requêtes des usagers. Le serveur central diffuse les requêtes vers les serveurs d'usager accessibles au moment de la requête.

Les systèmes d'échanges en mode "peer to peer" posent les mêmes types de problèmes que tout système de partage global :

- le filtrage de la quantité et de la qualité de l'information selon sa source ;
- l'impersonnalité des échanges.

Parmi les systèmes à partage contrôlé d'informations, on peut citer :

- les listes d'adresses pour des messages à diffuser (mailing list) ; et
- les dossiers partagés des systèmes de messagerie ou de fichiers.

Les systèmes à partage contrôlé d'informations résolvent une partie des problèmes de la diffusion incontrôlée de l'information et de la quantité d'informations perçues des systèmes précédents.

Les listes d'adresses pour des messages à diffuser définissent des destinataires des messages à diffuser. Mais ces listes comportent encore des inconvénients.

Lorsqu'une liste d'adresses est personnelle, seul l'usager ayant créé la liste d'adresses peut envoyer des messages aux adresses de destinataire de cette liste. Lors de la réception d'un message, un usager destinataire ignore la liste personnelle de l'expéditeur du message pour l'utiliser comme critère de filtrage et ne peut pas filtrer le message reçu autrement qu'à partir de l'adresse de l'expéditeur du message. Tous les messages de cet expéditeur, quel que soit le sujet, sont alors filtrés.

Lorsqu'une liste d'adresses est publique, tous les usagers peuvent envoyer un message à l'expéditeur de cette liste et les destinataires du message correspondent aux adresses dans la liste ; tout usager de la liste peut filtrer la liste ou peut demander à ne plus appartenir à la liste. Mais si un message intéresse deux groupes d'usagers correspondant à deux listes et qu'un usager est commun à ces deux listes, le terminal de l'usager commun recevra deux fois ce message.

Les dossiers partagés de systèmes de messagerie ou de fichiers permettent de créer plus facilement de nouveaux espaces d'échanges et de contrôler leur accès plus précisément. Chaque usager peut partager ses dossiers avec certains usagers en gérant des listes d'usagers autorisés. Mais un message ou un fichier ne peut appartenir à deux dossiers partagés qu'en tant que copie dans chacun des deux dossiers pour être accessible par l'ensemble des usagers qui ont le droit d'accéder à au moins l'un des deux dossiers.

Quel que soit le système à partage contrôlé utilisé, lorsque des listes de diffusion ou des listes de membres autorisés sont gérées manuellement, l'usager gérant une liste y insert uniquement des identificateurs des usagers qu'il connaît. Il est vrai que des usagers peuvent aussi parfois demander à être inscrit. Mais un usager ne peut prendre connaissance d'une liste de diffusion existante et savoir si le contenu peut l'intéresser s'il n'a pas déjà accès à ce contenu.

Ainsi, les systèmes à partage contrôlé ont les deux inconvénients suivants :

- l'information est dupliquée lorsqu'elle doit être partagée à deux groupes d'individus ;
- un usager ne pas prendre connaissance de l'existence d'informations intéressantes lorsque celles-ci sont diffusées via un canal auquel l'usager n'a pas encore accès.

Quel que soit le mode d'échanges et les technologies associées, on observe dans la plupart des systèmes d'échanges d'information des problèmes liés à la nature des comportements des usagers.

Un des comportements souvent observés est celui d'usagers appelés "passagers clandestins" : de nombreux usagers se contentent de recevoir de l'information sans en produire. D'autres attendent de recevoir suffisamment d'informations avant d'en produire eux-mêmes. D'autres peuvent se décourager de ne rien recevoir en échange de leur participation et ont un besoin de réciprocité.

Ces comportements posent les deux problèmes suivants sur la qualité et la robustesse du système d'échange.

Le premier problème est l'amorçage du système de partage. Il faut en effet qu'il y ait suffisamment de contenus à recevoir pour que les usagers décident de participer aux échanges.

Le deuxième problème est une conséquence du premier et concerne la dépendance de la qualité du système d'échange au petit nombre d'usagers qui produisent la plus grande partie de l'information partagée. Il suffit que cette petite partie d'usagers s'absentent ou se désintéressent du système et tous les usagers en sont pénalisés.

Enfin, la pluralité et la diversité de l'information espérées via le réseau internet peuvent être remises en question par le fait que les informations les plus diffusées proviennent de sources peu nombreuses. Les usagers qui diffusent leurs informations à de nombreux autres usagers règnent alors avec un grand pouvoir pouvant être néfaste aux autres usagers, en diffusant de la désinformation ou promouvant des rumeurs, par exemple. La qualité et l'appréciation du système d'échange d'informations risquent alors d'être grandement dégradée.

Bien que le réseau internet ait été présenté comme un support d'échanges et de partage et qu'il ait permis le développement de systèmes tels que des forums, des systèmes d'échanges en mode "peer to peer" et des listes de diffusion, le principe même du partage dans une communauté pose principalement les problèmes suivants :

- le contrôle de la diffusion d'informations ;
- l'impersonnalité des échanges lorsqu'il y a trop d'usagers participants ;
- l'information utile noyée dans un flot d'informations trop important ;
- le déséquilibre entre le nombre de producteur et de consommateur d'informations ; et
- la dépendance du système au peu d'usagers qui produisent de l'information.

L'objectif de la présente invention est de résoudre les problèmes évoqués ci-dessus, particulièrement de fournir un système de gestion d'accès à des informations qui facilite le contrôle de l'accès aux informations qu'un usager a créées par d'autres usagers et qui propose des mises en relation entre usagers d'une manière à favoriser la répartition équitable de la production et la diffusion de l'information entre les usagers et par suite la diffusion d'informations vers des usagers qui sont les plus intéressés par ces informations.

Plus précisément, l'invention concerne un système relié à plusieurs terminaux d'usager pour gérer l'accès à des documents partagés au moyen d'étiquettes. Une étiquette est associée à un identificateur d'un document respectif et à un identificateur d'un usager respectif ayant créé l'étiquette et comprend un intitulé du document.

Pour atteindre l'objectif précité, un système de gestion d'accès selon l'invention comprend un moyen pour mémoriser des références annotées de document respectivement associées à des documents et créées par des usagers depuis leurs terminaux, chaque référence incluant un identificateur du document respectif, un identificateur de l'usager respectif et au moins une étiquette créée par l'usager respectif, chaque étiquette comprenant une liste d'inclusion contenant des identificateurs d'usagers qui sont autorisés par l'usager respectif à lire l'étiquette, un moyen pour déterminer des facteurs d'évaluation pour des couples de première et deuxième étiquettes, un facteur d'évaluation étant représentatif de l'intérêt d'une première étiquette créée par un premier usager pour un deuxième usager ayant créé une deuxième étiquette dont la liste d'inclusion n'inclut pas l'identificateur du premier usager, et un moyen pour établir des propositions respectivement transmises aux terminaux d'usager en réponse à des demandes de ceux-ci, une proposition pour un premier usager comprenant un triplet incluant une étiquette déterminée créée par le premier usager, un identificateur d'un deuxième usager et un facteur d'intérêt de proposition qui est relatif à l'intérêt du deuxième usager pour l'étiquette déterminée et qui est une fonction linéaire du maximum des facteurs d'évaluation évaluant l'intérêt des premières étiquettes créées par le premier usager pour le deuxième usager ayant créé une deuxième étiquette et du maximum des facteurs d'évaluation évaluant l'intérêt des deuxièmes étiquettes créées par le deuxième usager pour le premier usager ayant créé l'étiquette prédéterminée.

Selon une autre caractéristique de l'invention, le moyen pour établir mémorise respectivement à la demande des usagers depuis leurs terminaux, des listes d'identificateurs d'étiquettes non désirées respectivement associées aux identificateurs d'usager afin que le moyen pour établir interdise la transmission de références annotées ayant une étiquette non désirée incluse dans la liste respective associée à un usager, au terminal de l'usager.

Selon une réalisation préférée, un facteur d'évaluation déterminé par le moyen pour déterminer et relatif à un premier usager ayant créé une première étiquette E et à un deuxième usager ayant créé une deuxième étiquette F dont la liste d'inclusion n'inclut pas l'identificateur du premier usager, est du type :

$$EVAL(E,F) = j(G,F) + a1 * \left( \frac{1}{Rg(a(F))} \right),$$

j (E, F) est un coefficient matriciel égal au rapport du nombre de documents qui sont référencés avec des références annotées contenant une étiquette dont la liste d'inclusion contient au moins celle de la première étiquette E et avec une référence annotée contenant une étiquette dont la liste d'inclusion contient au moins celle de la deuxième étiquette F sur le nombre Card(F) de documents référencés avec une référence annotée contenant la deuxième étiquette. a1 est un coefficient prédéterminé au plus égal à 1. a(F) est une composante vectorielle égale au nombre d'identificateurs d'usager inclus dans la liste d'inclusion de la deuxième étiquette F et relatifs à des usagers qui ont créé chacun un nombre prédéterminé n de références annotées pour un document référencé avec une référence annotée contenant au moins ladite deuxième étiquette F et dont les listes d'identificateurs d'étiquettes non désirées ne contiennent pas l'identificateur de ladite deuxième étiquette F. Le nombre prédéterminé n vérifie la relation $(n/Card(F)) > SE$, où SE est un seuil fixé par l'administrateur du système. Rg est le rang de la composante vectorielle a(F) parmi les composantes vectorielles triées par ordre décroissant pour toutes les étiquettes mémorisées.

Selon l'invention, les informations contenues dans les intitulés des étiquettes sont diffusées par des échanges

de références annotées sur des documents, un document étant le contenant d'un ensemble organisé d'informations lisibles par un usager.

Dans le système de l'invention, un usager peut décider d'échanger des références annotées sur des documents avec des usagers déterminés automatiquement en fonction des étiquettes portées sur les documents. L'usager reçoit à sa demande des références annotées sur des documents étiquetés par d'autres usagers, et des propositions de diffusion ou de partage de références annotées de document à de nouveaux usagers.

Avantageusement, une référence de document dans laquelle une étiquette est incluse par l'usager ayant créé la référence ne sera pas toujours diffusée aux mêmes usagers contrairement aux listes de diffusion dans des systèmes de messagerie classiques. L'adressage d'une information ne se fait pas en énumérant des adresses physiques, mais ces adresses sont déterminées en fonction des identificateurs d'usager dans les listes d'inclusion des étiquettes associées à cette information. Les étiquettes relatives à un document participent à la description du sens du document et sont utilisées pour un adressage sémantique du document.

En créant des références annotées, un usager gère ses informations pour ses besoins personnels tout en préparant la diffusion et le partage de ses informations en une seule action. Le surcoût pour l'usager lié au partage de l'information est ainsi minimisé.

Contrairement aux systèmes classiques de recommandations de contenus qui proposent à un usager en manque d'information d'être directement ajouté à certaines listes de diffusion, le système de l'invention propose à un usager désireux d'avoir plus d'informations d'ajouter lui-même les identificateurs de nouveaux usagers parmi ceux proposés aux listes d'inclusion associées à ses propres étiquettes. Les propositions transmises à un premier usager invitent celui-ci à introduire des identificateurs d'autres usagers dans les étiquettes du premier usager, et par suite, ceci permet à ces autres usagers de prendre connaissance de ces étiquettes et les incite, en fonction de propositions respectives, à introduire l'identificateur du premier usager dans les étiquettes des autres usagers.

Le système de l'invention oblige ainsi un usager d'abord à diffuser de l'information intéressante pour en recevoir ensuite, contrairement aux systèmes connus de recommandations qui visent à ajouter directement un usager demandeur à des listes de diffusion d'informations intéressantes selon le profil de l'usager. L'invention met en place un mécanisme d'échange basé sur une relation "donnant-donnant" et stimule alors la production d'informations, motive le partage d'informations et évite le problème de l'amorçage du système et de "passagers clandestins".

Pour éviter la trop forte dépendance du système de gestion de l'invention à certains usagers qui produiraient la plus grande partie de l'information, le système choisit les usagers à mettre en relation de manière à répartir l'information diffusée entre les usagers. Au lieu de mettre en relation un usager avec un autre qui est le plus adapté à lui diffuser de l'information, le système propose une liste ordonnée des identificateurs des usagers les plus adaptés. Ensuite, au lieu de choisir le meilleur, le système analyse l'importance des relations déjà existantes de ces usagers avec d'autres, au moyen des facteurs d'évaluation, et propose l'identificateur d'un usager dont les relations existantes ne sont pas déjà trop importantes. Ainsi le système ne renforce pas un "attachement préférentiel" des "meilleurs" usagers afin que ceux-ci n'aient pas trop d'importance dans la diffusion de l'information.

Comme on le verra dans la suite de la description, un facteur d'évaluation peut être atténué par d'autres facteurs afin que dans le choix des usagers à mettre en relation, le système de gestion considère l'influence d'un premier usager sur les relations déjà existantes d'un autre usager. Ce dernier reçoit une nouvelle proposition afin que la nouvelle relation proposée avec le premier usager ne risque pas de renforcer une influence éventuellement déjà trop importante. Ainsi, le système de l'invention répartit l'importance de l'influence des usagers dans la diffusion d'information.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un système de gestion d'accès selon l'invention ;
- la figure 2 est un diagramme de références annotées sur un document et d'étiquettes dans l'une de ces références ; et
- la figure 3 est un algorithme d'étapes exécutées principalement dans un serveur de contrôle et de proposition inclus dans le système de gestion d'accès, pour établir des propositions à la demande d'un usager.

En référence à la figure 1, un système de gestion d'accès à des informations partagées selon l'invention comprend essentiellement trois serveurs SCO, SGBD et SCP et plusieurs terminaux d'usager dont deux TU et TV sont représentés. Chaque usager peut accéder au système par plusieurs terminaux. Par convention, TU désigne le dernier terminal de l'usager U à partir duquel l'usager a été authentifié par le système de gestion. Les serveurs et les terminaux sont reliés à travers un réseau de télécommunications RT comprenant le réseau internet et des réseaux d'accès respectifs pour les terminaux d'usager TU et TV. Par exemple, lorsqu'un terminal d'usager est un ordinateur personnel équipé d'un modem ou est un terminal intelligent du type récepteur de télévision ou poste de radio, le réseau d'accès

est le réseau téléphonique commuté. Selon un autre exemple, lorsque le terminal d'usager est du type radiotéléphone ou objet électronique portable, le réseau d'accès est un réseau de radiotéléphonie.

Le système de gestion selon l'invention présente classiquement une architecture du type client-serveur entre les terminaux d'usager TU, TV et le serveur SCO, dit serveur de communication, constituant une interface de communication entre les terminaux d'usager et les deux autres serveurs SGBD et SCP. En variante, les trois serveurs SCO, SGBD et SCP sont regroupés dans une plate-forme commune.

Avant de décrire les fonctionnalités des serveurs SGBD et SCP, on définit ci-après deux unités de données dites "références annotées de document" RAD associées à un document D et "étiquettes" E incluses dans une référence RAD et par conséquent associée au document D, comme montré à la figure 2.

Un document au sens de l'invention comprend un ensemble organisé d'informations lisibles par un usager. Le document est par exemple un message tel qu'un courrier électronique (e-mail), un rapport, une ou plusieurs images fixes et/ou une ou plusieurs images animées (vidéo). Le document peut être mono ou multimédia; par exemple, le document peut être textuel, ou audio-textuel ou audio-vidéo-textuel ; typiquement, un document traite un sujet spécifique tel qu'un livre, un film, un morceau musical, un jeu, un restaurant, etc. Un document D est désigné de manière non ambiguë par un identificateur ID.

Une **référence annotée de document** RAD associée au document D et créée par l'usager U inclut l'identificateur ID du document référencé D, un identificateur IU de l'usager U, une ou plusieurs étiquettes E créées et gérées par l'usager U, et optionnellement un titre TI lié au document D suivi d'éventuels commentaires. L'identificateur ID du document D est déterminé en fonction d'une localisation physique du document D telle qu'un chemin dans un système de gestion de fichiers, une adresse URL (Uniform Resource Locator) accessible sur le réseau internet, ou est déterminé de manière spécifique par un outil de gestion électronique de documents.

Les **étiquettes** E qui sont associées à un document D dans une référence RAD appartiennent à une nomenclature personnelle de l'usager U qui a créé la référence RAD. Une étiquette E est associée à l'identificateur IU dont l'usager U a créé l'étiquette et donc a créé la référence RAD et qui est contenu dans la référence RAD. L'étiquette E contient un intitulé d'étiquette NE composé bien souvent d'un mot ou de quelques mots définissant ou commentant une ou plusieurs caractéristiques et/ou appréciations du document D par l'usager U. Par exemple, lorsque le document D a pour thème l'époque napoléonienne, l'intitulé NE peut contenir "époque napoléonienne", ou bien "histoire après la révolution", ou bien une ou plusieurs dates, ou bien "histoire de France", etc.

Selon l'invention, une étiquette E comprend une **liste d'inclusion d'usager** LIN et une **liste d'exclusion d'usager** LEX. Au moyen des listes LIN et LEX, le serveur SCP contrôle l'accès à des étiquettes E les contenant, et plus généralement à la référence RAD contenant l'étiquette. L'usager U gère les étiquettes qu'il crée au moyen d'une interface graphique d'usager IGU dans le terminal TU et comprenant un navigateur avec une application du type applet Java pour dialoguer avec le serveur SCP à travers le serveur de communication SCO. Les listes LIN et LEX sont composées d'identificateurs d'usager enregistrés dans une base de données BD contenue dans le serveur SGBD. La liste d'inclusion LIN d'une étiquette contient des identificateurs d'usagers qui peuvent lire l'étiquette. La liste d'exclusion LEX d'une étiquette contient des identificateurs d'usagers qui ne sont pas autorisés à lire l'étiquette. La liste d'inclusion LIN peut contenir explicitement l'identificateur IU de l'usager ayant créé l'étiquette, ou implicitement celui-ci puisque la référence RAD incluant l'étiquette contient l'identificateur IU.

Pour définir ces listes, l'usager U choisit des identificateurs d'usager parmi ceux d'une liste des contacts LC transmise par le serveur SGBD et affichée dans le terminal TU. En complément, l'usager peut saisir directement les adresses e-mail d'usagers, en tant qu'identificateurs d'usager, dans son terminal TU. Les identificateurs d'usager dans la liste des contacts LC transmise sont ceux contenus dans les listes LIN et LEX associées aux étiquettes E que l'usager U a déjà créées et comprennent également les identificateurs IV d'autres usagers V qui ont ajouté l'identificateur IU de l'usager U dans au moins l'une de leurs listes respectives LIN et LEX. La liste de contacts LC de l'usager U définit la visibilité de l'usager U sur les informations qu'il peut échanger ou non avec des usagers identifiés.

Pour gérer le contrôle d'accès de l'usager U à des références annotées, le serveur SCP détermine et met à jour automatiquement une **liste de diffusion** LD d'une référence annotée de document RAD chaque fois qu'une liste d'inclusion ou d'exclusion d'une étiquette dans la référence RAD est modifiée. La liste de diffusion LD est égale à la réunion de l'ensemble des identificateurs des usagers appartenant aux listes d'inclusion LIN dans les étiquettes E de la référence RAD, lorsqu'à ladite réunion est soustraite la réunion des identificateurs des usagers appartenant aux listes d'exclusion LEX dans les étiquettes de la référence RAD.

La liste des contacts LC et la liste de diffusion LD pour la référence annotée de document RAD sont affichées sur l'écran du terminal TU afin que l'usager U sélectionne des identificateurs d'usager pour les introduire dans une liste d'inclusion ou dans une liste d'exclusion.

Les listes d'inclusion LIN et les listes d'exclusion LEX sont élaborées selon une hiérarchie arborescente. Chaque étiquette E est une spécialisation d'une autre étiquette relativement à l'usager qui a créé les étiquettes. Par exemple pour une étiquette déjà créée E1, dite étiquette ascendante, une étiquette E2 est dite sous-étiquette ou étiquette descendante à créer. Par exemple, la liste d'inclusion de la sous-étiquette E2 est composée de l'union de la

liste d'inclusion de la sous-étiquette E2 dont les identificateurs d'usager ont été saisis par l'usager, et de la liste d'inclusion de l'étiquette ascendante E1, à laquelle union a été enlevée la liste d'exclusion de l'étiquette ascendante E1. La liste d'exclusion de l'étiquette E2 est un composé de l'union de la liste d'exclusion de la sous-étiquette E2 dont les identificateurs d'usager ont été saisis par l'usager, et de la liste d'exclusion de l'étiquette ascendante E1, à laquelle union a été enlevée la liste d'inclusion de l'étiquette ascendante E1. Un contrôleur CT dans le serveur SCP ajoute l'étiquette E2 à la fin d'une liste d'étiquettes ascendantes dont la dernière est l'étiquette E1 et effectue les opérations suivantes dans l'étiquette E2 proposée par l'usager :

- retirer tous les identificateurs d'usager déjà contenus dans la liste d'inclusion LIN de l'étiquette ascendante E1, dans la liste d'exclusion LEX de l'étiquette E2,
- ajouter tous les identificateurs d'usager déjà contenus dans la liste d'exclusion LEX de l'étiquette E1, dans la liste d'exclusion LEX de l'étiquette E2,
- ajouter tous les identificateurs d'usager déjà contenus dans la liste d'inclusion LIN de l'étiquette E1, dans la liste d'inclusion LIN de l'étiquette E2, et
- retirer tous les identificateurs d'usager déjà contenus dans la liste d'exclusion LEX de l'étiquette E1, dans la liste d'inclusion LIN de l'étiquette E2.

Ainsi la liste d'inclusion LIN et la liste d'exclusion LEX de l'étiquette E2 est corrigée automatiquement par le serveur SCP après chaque saisie d'identificateur par l'usager U.

Le **serveur de gestion de base de données** SGBD gère principalement les données personnelles des usagers, appelées "profils" des usagers, la nomenclature des étiquettes pour chacun des usagers, et les références annotées des documents référencés.

Le profil personnel PU de l'usager U, qui peut être lu par d'autres usagers dont les identificateurs sont contenus dans la liste de diffusion LD associée à l'usager U, est écrit dans la base de données BD sous la forme d'une table ayant comme entrée principale l'identificateur IU de l'usager qui peut être anonyme et constitué par exemple par un pseudonyme ou un surnom ou une adresse e-mail, et qui contient les données suivantes :

- un mot de passe MP,
- une adresse e-mail,
- un éventuel site web de l'usager U,
- une description personnelle de l'usager comprenant notamment ses centres d'intérêt, et
- des préférences de l'usager qui sont traduites par des coefficients a1 à a7 qui sont définis en détail dans la suite de la description. Ces coefficients compris entre 0 et 1. Pour chacune des informations de profil PU, à l'exclusion du mot de passe, l'usager U gère un indicateur pour déclarer si cette information est lisible des autres.

La nomenclature des étiquettes respectives E utilisées par l'usager U comprend les contenants des étiquettes définis ci-dessus, tels que les identificateurs d'étiquette IE, les intitulés NE des étiquettes, les ascendants directs de chaque étiquette dans la hiérarchie de spécialisation des étiquettes, la liste d'inclusion LIN et la liste d'exclusion LEX de chaque étiquette, ainsi que la liste des contacts LC de l'usager U telles que définies ci-dessus et permettant à d'autres usagers d'ajouter leurs identificateurs dans une liste d'inclusion d'une étiquette publique de l'usager.

Le serveur SGBD contient également les champs ID, IU, DI et E définis ci-dessus des références annotées de document RAD également en association avec l'identificateur d'usager IU qui a créé chaque référence.

Les différentes listes ainsi énoncées sont brièvement schématisées dans le bloc BD à la figure 1.

Le serveur SGBD assure différentes fonctions. Il comprend un contrôleur CR qui traite des requêtes transmises par les terminaux d'usager TU, TV qui élabore des réponses à destination de ces terminaux à travers le serveur de communication SCO. Le contrôleur CR met à jour les données dans la base de données BD principalement lors de l'exécution des opérations suivantes. Le contrôleur CR écrit les références annotées de document RAD dans la base BD en correspondance aux identificateurs d'usager respectifs IU. Pour chaque référence RAD sont extraits et classés l'identificateur de document ID, les identificateurs IE des étiquettes E et leurs intitulés TI, y compris avec des commentaires, et la liste des étiquettes E. Le contrôleur CR gère également la visibilité des informations contenus dans les profils personnels des usagers en éditant et mettant à jour la liste des contacts de chaque usager. Le contrôleur CR gère la nomenclature des étiquettes par usager ainsi que leurs intitulés NE. A la requête d'un usager, le contrôleur CR peut rechercher l'identificateur d'un document ID pour un identificateur d'étiquette donné. Le contrôleur CR répertorie également les références annotées RAD qui portent sur un même document. Enfin le contrôleur CR inscrit les nouveaux usagers V dans la base BD créant des identificateurs d'usager IV et enregistrant leurs profils personnels PV.

Le serveur de communication SCO constituant une interface entre chaque terminal d'usager et les serveurs SGBD et SCP trie les requêtes transmises par les terminaux TU, TV en dépendance des fonctions appelées dans les requêtes afin de les diriger respectivement vers les serveurs SGBD et SCP. Le serveur SCO authentifie également

les usagers au début d'une session entre un terminal d'usager et le serveur SCO. Les requêtes et les réponses entre les terminaux d'usager et le serveur SCO à travers le réseau de télécommunications RT sont par exemple supportées par le protocole HTTP (HyperText Transfer Protocol).

Le contrôleur CT dans le **serveur de contrôle et de proposition SCP** assure principalement un contrôle de la diffusion des références RAD que chaque usager a créées, un contrôle du filtrage de certaines références RAD auxquelles un usager peut accéder, et un contrôle des références RAD qu'un usager gère d'une part et d'autres références RAD auxquelles cet usager peut accéder d'autre part. Le serveur SCP comprend également en relation avec le contrôleur CT, un module de détermination de facteurs pour proposition MDF selon l'invention, associée à une base de données BF enregistrant des facteurs pour chaque usager identifié.

Tout usager déterminé U peut décider d'associer à chacune des étiquettes E de la nomenclature propre à cet usager, l'une ou l'autre ou les deux listes d'usager définies ci-dessus, appelées listes d'inclusion LIN et liste d'exclusion LEX. Ces deux listes sont utilisées pour contrôler les usagers qui accèdent à une référence RAD créée par l'usager déterminé U et contenant l'étiquette E.

Après avoir défini quelques étiquettes avec des listes d'inclusion LIN et d'exclusion LEX, si l'usager déterminé U décide d'ajouter dans l'une des listes LIN ou LEX un identificateur IV d'un usager V à partir de l'adresse e-mail de l'usager V, le contrôleur CT dans le serveur SCP recherche si l'identificateur IV à ajouter correspond à un usager déjà enregistré. Si aucun identificateur IV correspondant à l'adresse de courrier électronique (e-mail) de l'usager V n'est présent dans la base de données BD, le contrôleur CT crée automatiquement un identificateur IV de l'usager V à partir de son adresse e-mail et génère aléatoirement et automatiquement un mot de passe MP pour ce nouvel usager V. Par exemple, pour l'adresse aa.bb@server.xxx, l'identificateur IV est aa.bb. Si l'identificateur IV existe déjà, le contrôleur CT ajoute une unité au nombre d'occurrences de l'identificateur IV inclus dans des listes LIN et LEX afin ultérieurement d'indiquer à l'usager V le nombre de contacts pour cet usager V. Puis le contrôleur CT dans le serveur SCP commande dans le serveur de communication SCO la transmission d'un message contenant notamment l'identificateur IV et le mot de passe de l'usager V au terminal de l'usager V désigné par l'adresse e-mail fournie par l'usager U. L'usager V introduit par l'usager U dans le système de gestion peut ultérieurement consulter les informations le concernant dans la base de données BD.

Le contrôle de la nomenclature d'étiquette signale à un usager U que certaines étiquettes E sont visibles par les autres usagers V. A cette fin, dans la base de données BD, chaque étiquette est associée à un indicateur binaire PU/PR. Lorsque l'indicateur est à un premier état PU, l'étiquette E est alors publique et n'importe quel usager V peut ajouter son identificateur IV dans la liste d'inclusion LIN de l'étiquette E afin d'accéder à l'intitulé NE dans cette étiquette.

Cependant, si l'usager U ne décide pas de mettre à l'état PU l'indicateur, l'indicateur de l'étiquette demeure par défaut à un deuxième état dit état privé PR ce qui n'autorise que l'usager U ayant créé l'étiquette E à modifier la liste d'inclusion LIN de l'étiquette E.

Lorsque l'usager U déclare publique une étiquette E, le contrôleur CT rend publiques toutes les sous-étiquettes de l'étiquette, c'est-à-dire toutes les étiquettes descendantes de l'étiquette publique E en mettant leurs indicateurs à l'état PU. Néanmoins, l'usager U peut mettre à nouveau à l'état privé une sous-étiquette d'une étiquette publique en positionnant l'indicateur de la sous-étiquette à l'état PR. Lorsqu'un usager V ajoute son identificateur IV dans la liste d'inclusion LIN d'une étiquette publique E1, le système recherche si des sous-étiquettes E2 de l'étiquette E1 sont privées. Pour chacune des sous-étiquettes privées trouvées E2, le contrôleur CT ajoute l'identificateur IV de l'usager V dans la liste d'exclusion LEX de la sous-étiquette privée E2.

A ce stade, on notera qu'un usager U ne peut pas diffuser ses propres informations contenues dans les étiquettes qu'il a créées, systématiquement à tous les usagers contenus dans les listes de diffusion de ses références RAD, c'est-à-dire dans l'ensemble des listes d'inclusion LIN de ses étiquettes, et ainsi faire du "spam". L'usager U ne peut que rendre visible ses étiquettes. Les références annotées RAD avec ses étiquettes publiques ne seront alors diffusées à un autre usager V que si celui-ci les requiert explicitement.

Le contrôleur CT dans le serveur SCP **filtre** l'information accessible par un usager U dans les étiquettes afin d'interdire à la demande de l'usager U :

- la transmission de références RAD ayant une étiquette prédéterminée au terminal TU ; par exemple l'étiquette prédéterminée contient un identificateur d'étiquette IE prédéterminé et/ou un identificateur d'usager IV correspondant à un usager prédéterminé V, et
- la transmission de toute référence RAD contenant l'identificateur ID d'un document prédéterminé D vers le terminal TU.

Une liste LEND des identificateurs IE des étiquettes non désirées définies ci-dessus en association avec les couples respectifs ID et IV de la référence annotée RAD contenant l'étiquette est enregistrée dans la base de données BD pour chaque usager U.

Lorsque l'usager U consulte une référence RAD associée à un document prédéterminé D et demande par

l'interface IGU qu'il ne souhaite plus recevoir des références RAD, le contrôleur CT crée une nouvelle référence RAD qui est associée au document prédéterminé D et qui contient une étiquette spéciale ES qui indique une suppression de consultation de références annotées RAD du document prédéterminé D par l'usager U. L'étiquette spéciale ES contient un identificateur d'étiquette spécifique, l'identificateur IU de l'usager U et un intitulé "suppression". La référence RAD ayant enregistrée l'étiquette spéciale ES est enregistrée dans la base BD comme les autres références RAD en association avec l'identificateur ID du document prédéterminé. Par la suite, toutes les références RAD sur le document prédéterminé D sont cachées à l'usager U, par exemple lorsque celui-ci demande au serveur SCP de lui transmettre toutes les étiquettes dont les listes d'inclusion LIN contiennent son identificateur IU.

Le contrôleur CT filtre également les références RAD qui contiennent l'identificateur ID d'un même document D et dont au moins une contient l'identificateur IU de l'usager U. Le contrôleur CT présente alors à travers l'interface d'usager IGU la référence RAD créée par l'usager U sur le document D, mais également toutes les autres références RAD du document D. Le sens du document D est ainsi présenté à l'usager U selon un "adressage sémantique" constitué par les intitulés NE des étiquettes dans toutes les références RAD qui portent sur le document D.

Les étiquettes créées par l'usager U et les listes d'identificateurs d'usager incluses dans les étiquettes dont les listes d'inclusion contiennent l'identificateur de l'usager et le moyen de filtrage dans le contrôleur CT défini ci-dessus servent à déterminer **l'information qui est consultable** par chaque usager U. Lorsque l'usager U accède au système de gestion d'accès, le serveur SCP présente l'ensemble des étiquettes que l'usager U gère et l'ensemble des étiquettes auxquelles l'usager U peut accéder et qu'il n'a pas décidé de filtrer, en excluant les étiquettes dont les identificateurs appartiennent à la liste des étiquettes non désirées LEND de l'usager U. L'usager U prend alors connaissance des intitulés et des noms des créateurs dans les étiquettes affichées sans que les listes d'inclusion LIN dans celles-ci soient affichées. L'usager U peut aussi demander l'affichage des étiquettes publiques F d'un usager V dans le terminal TU et non gérées par l'usager U. L'identificateur IV de l'usager V est également affiché. Au moyen de l'identificateur IV, l'usager U peut demander au serveur SGBD de lui fournir les données du profil PV de l'usager V lues dans la base de données BD qui sont déclarées visibles par l'usager V.

Lorsque l'usager U sélectionne une étiquette E qu'il gère, le serveur SGBD transmet au terminal TU toutes les références RAD qui possèdent l'étiquette sélectionnée E et qui ne référencent pas un document qui est associé à une référence RAD créée par l'usager U et contenant une étiquette de suppression ES, comme défini ci-dessus.

Lorsque l'usager U sélectionne une étiquette qu'il ne gère pas, par exemple une étiquette F gérée par un autre usager V, le serveur SCP transmet au terminal TU l'ensemble des références RAD qui possèdent l'étiquette F, dont la liste de diffusion LD contient l'identificateur IU de l'usager U, et qui porte sur un document D pour lequel l'usager U n'a pas créé de référence RAD avec ses propres étiquettes E et pour lequel il n'existe pas de référence RAD créée par l'usager U et contenant une étiquette de suppression ES.

Lorsqu'un usager V consulte une référence annotée RAD qu'il n'a pas créée, seuls les intitulés des étiquettes dont la liste d'inclusion contient l'identificateur IV sont affichés.

Lorsqu'un usager U crée une référence RAD associée à un document déterminé D pour ses besoins personnels de gestion d'information, cette référence RAD ainsi créée est ensuite accessible à l'usager U à tout moment depuis l'interface IGU dans son terminal TU. La référence créée RAD et les étiquettes dont les listes d'inclusion contiennent l'identificateur IV sont également accessibles à tout autre usager V dont l'identificateur IV appartient à la liste de diffusion LD de la référence créée RAD et si celle-ci n'est pas filtrée.

L'interface d'usager IGU offre également à l'usager U la possibilité de créer une nouvelle référence RAD sur un document D dont une référence RAD est en cours de consultation par l'usager U. Cette nouvelle référence RAD assiste l'usager U pour rechercher ultérieurement le document D au moyen d'étiquettes appartenant à sa propre nomenclature et dont les intitulés NE correspondent à sa propre appréciation de l'information contenue dans le document D ou dans les étiquettes des autres références RAD attachées à ce document et à ses propres critères de diffusion définis par les listes LIN et LEX contenues dans ses étiquettes. Cette nouvelle référence RAD donne aussi accès à une référence sur le document à tous les usagers dont les identificateurs sont contenus dans l'ensemble des listes d'inclusion LIN des étiquettes incluses dans cette nouvelle référence RAD. L'information sur le document D est ainsi propagée parmi les usagers.

Dans les deux cas précédents, le système de serveurs associe automatiquement la tâche de gestion et d'archivage personnelle d'information à celle de diffusion d'information à d'autres usagers.

Pour que le module de détermination de facteur MDF dans le serveur SCP élabore une proposition à un usager U afin d'ajouter des identificateurs IV d'autres usagers V dans les listes d'inclusion LIN de certaines des étiquettes E qu'a créées et que gèrent l'usager U, le module MDF détermine divers facteurs qui sont des coefficients de trois matrices J, X et R et des composantes de quatre vecteurs A, DIF, C et D. La détermination de tous ces facteurs vise à **évaluer l'intérêt d'un usager U ayant une étiquette** E pour les références RAD ayant une étiquette F de l'usager V, c'est-à-dire à évaluer la valeur EVAL (E, F) d'une fonction d'intérêt **EVAL**, afin de proposer à l'usager V d'ajouter l'identificateur IU de l'usager U dans la liste d'inclusion de l'étiquette F. Tous les facteurs liés aux étiquettes et aux usagers sont réévalués périodiquement par le module MDF sous la commande du contrôleur CT, par exemple

une à deux fois par jour, dans une tâche de fond du serveur SCP indépendante des interactions avec les terminaux d'usagers connus TV afin d'établir des propositions pour tous les usagers ayant créé chacun au moins une référence annotée. Le résultat de cette évaluation, c'est-à-dire notamment les coefficients des matrices et les composantes des vecteurs ainsi que les valeurs de la fonction EVAL et d'autres fonctions INT et INP, sont enregistrés dans la base de facteurs BF incluse dans le serveur SCP.

Le coefficient matriciel j(E, F) à l'intersection de la ligne de la matrice J dédiée à l'étiquette E et de la colonne de la matrice J dédiée à l'étiquette F est représentatif de la probabilité qu'un document ayant une référence RAD avec l'étiquette F ou une sous-étiquette de l'étiquette F ait aussi une référence RAD avec l'étiquette E ou une sous-étiquette de l'étiquette E si le propriétaire U de l'étiquette E prend connaissance du document. En d'autres termes, le coefficient j(E, F) est représentatif de la probabilité que l'usager ayant créé l'étiquette E et lisant un document avec l'étiquette F ajoute l'étiquette E dans une référence RAD attachée à ce document et créée par l'usager U. Chaque coefficient j(E, F) de la matrice J peut être égal au rapport de cardinaux card(E et F)/card(F). Le premier nombre card(E et F) dénombre les documents qui sont référencés à la fois par une référence RAD(IU) contenant l'étiquette E ou une sous-étiquette de l'étiquette E et créée par l'usager U et par une référence RAD(IV) contenant l'étiquette F ou une sous-étiquette de l'étiquette F et créée par l'usager V, avec $IU \neq IV$. Le deuxième nombre card(F) dénombre les documents qui sont référencés au moins par une référence RAD contenant l'étiquette F ou une sous-étiquette de l'étiquette F.

Chaque composante a(F) du vecteur A pour une étiquette F créée par l'usager V est égale au nombre d'usagers U dont les identificateurs sont inclus dans la liste d'inclusion LIN de l'étiquette F et qui ont créé chacun un nombre n de références annotées RAD pour un document référencé avec une référence annotée RAD contenant au moins l'étiquette F et pour lesquels usagers U, leurs listes d'inclusion ne contiennent pas l'étiquette E. Le nombre prédéterminé n doit vérifier la relation $(n/Card(F)) > SE$, où SE est un seuil fixé par l'administrateur du système. La composante vectorielle a(F) évalue ainsi l'appréciation sur l'étiquette F par les usagers autorisés à accéder à l'étiquette F.

Chaque composante dif(F) du vecteur DIF pour une étiquette F créée par l'usager V est déterminée selon la formule suivante :

$$dif(F) = Min(n/N, pmax)/pmax, \text{ avec } dif < 1,$$

dans laquelle Min désigne la fonction minimum de n/N et pmax, n dénote le nombre d'identificateurs d'usager dans la liste d'inclusion LIN de l'étiquette F, N dénote le nombre d'identificateurs d'usager mémorisés dans la base BD au moment de la détermination du vecteur DIF, et pmax dénote un paramètre prédéterminé qui est inférieur à 1 et qui représente une proportion maximale acceptable d'usagers qui peuvent accéder à une étiquette. La composante dif(F) évalue ainsi l'importance de la diffusion de l'étiquette F.

Une composante c(V) du vecteur C est relative à un usager V et déterminée par la formule suivante :

$$c(V) = Min(c(IV), Cmax)/Cmax,$$

dans laquelle Min désigne la fonction minimum de c(V) et Cmax, c(IV) dénote le nombre d'étiquettes ayant chacune une liste d'inclusion LIN contenant l'identificateur IV de l'usager V, et Cmax est un paramètre prédéterminé égal au nombre d'étiquettes étrangères qu'un usager quelconque n'a pas créées et peut accepter. La composante c(V) évalue la charge de l'usager V dans le système de gestion d'accès.

Chaque coefficient x(E, F) dans la matrice X situé à l'intersection d'une ligne de cette matrice dédiée à une étiquette E de l'usager U et d'une colonne de cette matrice dédiée à une étiquette F de l'usager V est représentatif de l'influence de l'étiquette F sur l'étiquette E, pour qu'un document D ayant une référence RAD avec une étiquette F soit visible par l'usager U et que celui-ci crée une référence RAD avec une étiquette E. La matrice X est déterminée en fonction d'une matrice P et d'un ensemble EG d'étiquettes G. Un coefficient p(E, F) de la matrice P est égal au rapport du nombre card(E et F) de documents référencés par une référence annotée RAD qui contient l'étiquette E ou une sous-étiquette de l'étiquette E créée par l'usager U et aussi référencés par une référence annotée RAD qui contient l'étiquette F ou une sous-étiquette de l'étiquette F créée par l'usager V et pour lesquels documents l'usager U ayant créé l'étiquette E a son identificateur IU appartenant à la liste d'inclusion LIN de l'étiquette F, sur le nombre card(E) de documents ayant une référence annotée RAD contenant l'étiquette E ou une sous-étiquette de l'étiquette E, soit :

$$p(E, F) = card(E \text{ et } F)/card(E).$$

L'ensemble EG contient toutes les étiquettes G créées par l'usager U pour lesquelles p(E, G) # 0. Ces étiquettes G correspondent à des sources d'information pour être étiquetées avec l'étiquette E. La composante x(E, F)

de la matrice X est déterminée selon la formule suivante :

$$x(E, F) = p(E, F) + \left[ \sum_{G \in EG} p(E, G) * p(G, F) \right]^2 .$$

La matrice X est utilisée pour déterminer la matrice R comprenant des coefficients du type r(E, F). Un coefficient r (E, F) situé à l'intersection de la ligne de la matrice R dédiée à l'étiquette F et de la colonne de la matrice R dédiée à l'étiquette F est déterminé par la formule suivante :

$$r(E, F) = \sum_{G \in EG} \frac{x(G, F) * p(E, G)}{\sum_{G \in EG} p(E, G)} .$$

Le coefficient r(E, F) de la matrice R évalue la redondance de l'étiquette F par rapport aux étiquettes G pour une étiquette E dans des références annotées de documents qui sont également référencés avec des références RAD contenant l'étiquette F, c'est-à-dire le défaut de l'étiquette F d'être une source d'information pour l'étiquette E de l'usager U, car l'étiquette F est déjà source d'information d'étiquettes G elles-mêmes sources d'information de l'étiquette E.

Chaque composante d(E) du vecteur D pour l'étiquette E évalue la dépendance globale de l'étiquette E par rapport aux autres étiquettes G de l'usager U. Cette dépendance correspond à l'influence moyenne de sources d'information de l'étiquette E et peut être considérée comme inversement proportionnelle à l'autonomie de l'étiquette E par rapport aux autres étiquettes. Le coefficient d(E) est déterminé par la formule suivant :

$$d(E) = \sum_{G \in EG} \frac{x(E,G)}{card(G)} .$$

Le module de détermination de facteurs MDF détermine la fonction EVAL évaluant l'intérêt de l'étiquette F créée par l'usager V pour une étiquette E créée par l'usager U, avec IU ≠ IV, en fonction des facteurs déterminés précédemment, selon la formule suivante :

$$EVAL(E, F) = j(E,F) + a1 * \left( \frac{1}{Rg(a(F))} \right) - a2 * dif(F)$$
$$- a3 * c(V) - a4 * x(E,F) - a5 * r(E,F) - a6 * d(E) .$$

Dans cette formule, V désigne l'usager possédant et ayant créé l'étiquette F, et Rg(a(F)) est le rang de la composante a(F) dans une liste triée par ordre décroissant des valeurs des composantes du vecteur A pour toutes les étiquettes répertoriées dans la base données BD, deux composantes égales du vecteur A ayant le même rang, et a1, a2, a3, a4, a5 et a6 sont des coefficients compris chacun entre 0 et 1.

L'usager U sélectionne depuis par exemple son terminal TU au moins la valeur de l'un des coefficients a1 à a6 au plus égaux à 1 et associés à l'usager U. Par exemple, l'usager U sélectionne les valeurs suivantes des coefficients : a1 = 0,5, a2 = 0,25, a4 = 0,5 et a6 = 0,25 et l'usager V sélectionne au moins depuis son terminal TV la valeur 0,25 pour le coefficient a3. En variante, les valeurs de ces coefficients peuvent au moins partiellement être également imposés par défaut par le module MDF aux usagers. Les valeurs des coefficients a1 à a6 conditionnent les échanges que l'administrateur du système de gestion d'accès souhaite obtenir. Les coefficients a1 à a6 peuvent être aussi définis en fonction de valeurs préférées de ces coefficients saisies par l'usager respectif au moyen de l'interface graphique d'usager IGU dans le terminal TU. Les valeurs préférées de ces coefficients sont introduites dans le profil d'usager PU enregistré dans la base de données BD.

Par exemple si l'usager U souhaite diversifier ses sources d'information, et donc les usagers avec lesquels il risque d'être en contact, les coefficients a4, a5 et a6 sont égaux à 1. Si l'usager U souhaite privilégier la qualité de l'information, c'est-à-dire les compléments d'information à l'étiquette F, le coefficient a1 est égal à 1. Si l'usager V ne souhaite pas recevoir trop d'information, et donc limiter le nombre d'informations reçues, le coefficient a3 est égal à

1. Si l'usager U préfère prendre connaissance d'information qui est peu diffusée, le coefficient a2 est égal à 1.

Comme montré à la figure 3, **l'établissement de proposition** pour informer un usager U sur un autre usager V ou pour recommander à un usager U des étiquettes d'intérêt F relatives à d'autres usagers V, comprend des étapes S11 à S52. Ces étapes succèdent à la détermination des divers coefficients des facteurs entrant dans la détermination de tous les facteurs d'évaluation EVAL. Le module MDF dans le serveur SCP exécute ces étapes cycliquement, par exemple une à deux fois par jour, pour tous les usagers ayant créé chacun au moins une référence annotée de document RAD et plus précisément pour chaque couple d'identificateurs d'usager (IU, IV).

A l'étape S11, le module MDF sélectionne l'identificateur IU d'un usager U afin de rechercher pour l'usager U des étiquettes F créées par un autre usager V, avec $IV \neq IU$, les plus intéressantes pour l'usager U selon les facteurs EVAL(E, F) pour toutes les étiquettes F. Ces étiquettes F susceptibles d'intérêt pour l'usager U ont des listes d'inclusion LIN n'incluant pas l'identificateur IU de l'usager U. Puis le module MDF sélectionne une étiquette F créée par l'usager V à l'étape S12 afin de déterminer la fonction EVAL(G, F) représentant l'intérêt de l'étiquette F créée par l'usager V pour chaque étiquette G créée par l'usager U telle que $j(G,F) \neq 0$ comme indiqué à l'étape S13. Lorsque toutes les fonctions EVAL pour toutes les étiquettes G de l'usager U ont été déterminées à l'étape S14, le module MDF extrait la valeur maximale des fonctions EVAL telle que :

$$INT(U,F) = \max[EVAL(G,F)]$$

qui représente l'intérêt de l'usager U pour l'étiquette F, à l'étape S15. La valeur d'intérêt INT est évaluée et enregistrée dans la base BF pour chacune des étiquettes F appartenant à l'usager V comme indiqué à l'étape S16.

Puis le module MDF exécute des étapes S21 à S26 respectivement analogues aux étapes précédentes S11 à S16, mais pour l'usager V ayant l'identificateur IV et pour chaque étiquette E créée par l'usager U, avec $IU \neq IV$, afin de rechercher les étiquettes E les plus intéressantes pour l'usager V. Ainsi les lettres U, F et V dans les étapes S11 à S16 sont remplacées respectivement par les lettres V, E et U dans les étapes S21 à S26. Après l'étape S26, la base de données BD dans le serveur SCP a enregistré toutes les valeurs INT(V,E) traduisant l'intérêt de l'usager V pour les étiquettes E gérées par l'usager U.

Puis aux étapes suivantes S31 à S36, le module SCP sélectionne des propositions à la fois d'étiquette E pour l'usager U et d'étiquette F pour l'usager V.

Comme indiqué aux étapes S31 et S32, pour chaque étiquette F appartenant à l'usager V pour laquelle $INT(U,F) \neq 0$ et pour chaque étiquette E appartenant à l'usager U, le module MDF détermine un facteur d'intérêt de proposition INP dépendant de l'intérêt INT(U,F) de l'usager U pour l'étiquette F et de l'intérêt INT(V,E) de l'usager V pour l'étiquette E selon la fonction linéaire suivante :

$$INP = a7(U)*INT(U,F) + a7(V)*INT(V,E).$$

a7(U) et a7(V) sont des coefficients fixes imposés par le module MDF, ou bien sélectionnés respectivement par les usagers U et V, et déclarés dans les profils respectifs PU et PV et enregistrés dans la base de données BD dans le serveur SGBD. Les coefficients a7 peuvent être égaux à 1, et en général sont compris entre 0 et 1. Ce coefficient a7 représente le besoin de l'usager pour une réciprocité des propositions.

Puis à l'étape S33, le module MDF compare le facteur d'intérêt de proposition INP déterminé précédemment à un seuil prédéterminé TH par exemple égal à 0,5. Ce seuil est déterminé par l'administrateur du système. Si la valeur INP est supérieure au seuil TH, le module MDF ajoute dans la base de données BD à la liste de propositions pour l'usager U un triplet formé de l'étiquette E, de l'identificateur IV de l'usager V et de la valeur INP, et à la liste de propositions pour l'usager V un triplet formé de l'étiquette F, de l'identificateur IU de l'usager U et de la valeur INP, à l'étape S34. Après l'étape S33 si la valeur INP est inférieure au seuil TH, ou après l'étape S34, le module MDF continue à rechercher des propositions pour les usagers U et V pour les autres étiquettes E de l'usager U et les étiquettes F de l'usager V, comme indiqué aux étapes S35 et S36.

Afin de réduire le nombre de propositions, le module MDF conserve pour des propositions (E, IV, INP), (F, IU, INP) relatives à une famille d'étiquette E, F et de sous-étiquettes de l'étiquette E, F que l'étiquette ou la sous-étiquette ayant la valeur INP la plus élevée ; si les valeurs INP sont égales, l'étiquette ascendante de la famille est conservée.

Les propositions sous forme de triplet ainsi enregistrées dans le serveur SCP sont affichées à l'usager respectif, tel que l'usager U, dans les deux cas suivants, en réponse à une demande de l'usager depuis son terminal TU.

Dans un premier cas, lorsque l'usager U demande depuis le terminal TU une information sur un deuxième usager V, le serveur SCP commande l'affichage dans le terminal TU de toutes les étiquettes E de l'usager U et relatives aux propositions (E, IV, INP) pour l'usager U, selon l'ordre des valeurs décroissantes des facteurs d'intérêt INP dans

ces propositions, afin de mieux connaître les centres d'intérêt de l'usager V pour ceux de l'usager U.

L'usager U sélectionne alors au moins quelques premières étiquettes E dans la liste des propositions affichées afin d'inclure l'identificateur IV dans les listes d'inclusion LIN des étiquettes sélectionnées E. L'usager V prendra alors ultérieurement connaissance des références RAD avec l'une des étiquettes sélectionnées E, et donc du profil PU de l'usager U. Ceci signale à l'usager V que l'usager U apprécierait que son identificateur IU soit dans les listes d'inclusion LIN des étiquettes F de l'usager V. L'usager V pourra ensuite suivre des propositions [F, IU, INP] pour introduire l'identificateur IU dans les étiquettes F de l'usager V.

Le deuxième cas concerne le souhait du premier usager U de recevoir plus de références annotées de document RAD en transmettant une requête explicite depuis l'interface d'usager IGU dans son terminal TU vers le serveur SCP. Le serveur SCP commande, en réponse, l'affichage dans le terminal TU de toutes les étiquettes E de l'usager U en correspondance avec les identificateurs IV des usagers V ayant créé respectivement les étiquettes F et associées dans des propositions (E, IV, INP) relatives à l'usager V pour l'usager U et classées selon l'ordre décroissant des facteurs d'intérêt INP des propositions affichées. Au moyen de ces informations classées affichées dans le terminal TU, l'usager U peut sélectionner au moins une étiquette E contenue dans une proposition présentée à l'usager U et ajouter l'identificateur IV de l'usager V dans la liste d'inclusion LIN de l'étiquette sélectionnée E.

## Revendications

1. Système relié à plusieurs terminaux d'usager (TU, TV) pour gérer l'accès à des documents partagés au moyen d'étiquettes, une étiquette (E) étant associée à un identificateur (ID) d'un document respectif (D) et à un identificateur (IU) d'un usager respectif (U) ayant créé l'étiquette et comprenant un intitulé (NE) du document, **caractérisé en ce qu'**il comprend un moyen (SGBD) pour mémoriser des références annotées de document (RAD) respectivement associées à des documents (D) et créées par des usagers (U, V) depuis leurs terminaux, chaque référence (RAD) incluant un identificateur (ID) du document respectif (D), un identificateur (IU) de l'usager respectif (U) et au moins une étiquette (E) créée par l'usager respectif (U), chaque étiquette comprenant une liste d'inclusion (LIN) contenant des identificateurs d'usagers qui sont autorisés par l'usager respectif à lire l'étiquette, un moyen (MDF, BF) pour déterminer des facteurs d'évaluation (EVAL(G, F)) pour des couples de première et deuxième étiquettes (G, F), un facteur d'évaluation étant représentatif de l'intérêt d'une première étiquette (G) créée par un premier usager (U) pour un deuxième usager (V) ayant créé une deuxième étiquette (F) dont la liste d'inclusion (LIN) n'inclut pas l'identificateur (IU) du premier usager, et un moyen (SCP) pour établir des propositions respectivement transmises aux terminaux d'usager en réponse à des demandes de ceux-ci, une proposition pour un premier usager comprenant un triplet incluant une étiquette déterminée (E) créée par le premier usager (U), un identificateur (IV) d'un deuxième usager (V) et un facteur d'intérêt de proposition (INP) qui est relatif à l'intérêt du deuxième usager pour l'étiquette déterminée (E) et qui est une fonction linéaire du maximum (INT(U, F)) des facteurs d'évaluation (EVAL(G, F)) évaluant l'intérêt des premières étiquettes (G) créées par le premier usager (IU) pour le deuxième usager ayant créé une deuxième étiquette (F) et du maximum (INT(V, E)) des facteurs d'évaluation évaluant l'intérêt des deuxièmes étiquettes créées par le deuxième usager pour le premier usager ayant créé l'étiquette prédéterminée (E) .

2. Système conforme à la revendication 1, dans lequel le moyen pour établir (SGBD) mémorise respectivement à la demande des usagers depuis leurs terminaux, des listes (LEND) d'identificateurs (IE) d'étiquettes non désirées respectivement associées aux identificateurs d'usager afin que le moyen pour établir (SCP) interdise la transmission de références annotées (RAD) ayant une étiquette non désirée incluse dans la liste respective associée à un usager (U), au terminal (TU) de l'usager.

3. Système conforme à la revendication 2, dans lequel le moyen pour déterminer (MDF, BF) détermine un facteur d'évaluation relatif à un premier usager (U) ayant créé une première étiquette E et à un deuxième usager (V) ayant créé une deuxième étiquette F dont la liste d'inclusion (LIN) n'inclut pas l'identificateur (IU) du premier usager, qui est du type :

$$EVAL(E,F)=j(E,F)+a1*\left(\frac{1}{Rg(a(F))}\right),$$

où j(E, F) est un coefficient matriciel égal au rapport du nombre de documents qui sont référencés avec des références annotées (RAD) contenant une étiquette dont la liste d'inclusion contient au moins celle de la première

étiquette E et avec une référence annotée contenant une étiquette dont la liste d'inclusion contient au moins celle de la deuxième étiquette F sur le nombre Card(F) de documents référencés avec une référence annotée contenant la deuxième étiquette, a1 est un coefficient prédéterminé au plus égal à 1, a(F) est une composante vectorielle égale au nombre d'identificateurs d'usager inclus dans la liste d'inclusion (LIN) de la deuxième étiquette F et relatifs à des usagers qui ont créé un nombre prédéterminé n de références annotées pour un document référencé avec une référence annotée contenant ladite deuxième étiquette, et dont les listes d'identificateurs d'étiquettes non désirées (LEND) ne contiennent pas l'identificateur de ladite deuxième étiquette (F), le rapport n/Card(F) étant supérieur à un seuil prédéterminé, et Rg est le rang de la composante vectorielle a(F) parmi les composantes vectorielles triées par ordre décroissant pour toutes les étiquettes mémorisées.

**4.** Système conforme à la revendication 3, dans lequel le facteur d'évaluation EVAL(E, F) dépend du produit :

$$- a2 * dif(F),$$

dans lequel a2 est un coefficient au plus égal à 1 et dif(F) est une composante vectorielle inférieure à 1 relative à la deuxième étiquette (F) créée par le deuxième usager (V), telle que

$$dif(F) = Min(n/N, pmax)/pmax,$$

dans laquelle Min désigne la fonction minimum entre le rapport d'un nombre n d'identificateurs d'usager dans la liste d'inclusion (LIN) de la deuxième étiquette (F) et du nombre N d'identificateurs d'usager mémorisés, et d'un paramètre prédéterminé pmax.

**5.** Système conforme à la revendication 3 ou 4, dans lequel le facteur d'évaluation EVAL(E, F) dépend du produit :

$$- a3 * c(V),$$

dans lequel a3 est un coefficient au plus égal à 1 et c(V) est une composante vectorielle relative au deuxième usager (V) telle que

$$c(V) = Min(c(IV), Cmax)/Cmax,$$

dans laquelle Min désigne la fonction minimum entre un nombre c(IV) d'étiquettes ayant chacune une liste d'inclusion (LIN) contenant l'identificateur (IV) du deuxième usager (V) et un paramètre prédéterminé Cmax.

**6.** Système conforme à l'une quelconque des revendications 3 à 5, dans lequel le facteur d'évaluation EVAL(G, F) dépend du produit

$$- a4 * x(E, F),$$

dans lequel a4 est un coefficient au plus égal à 1 et x(G, F) est un coefficient matriciel du type :

$$x(E, F) = p(E, F) + \left[ \sum_{G \in EG} p(E, G) * p(G, F) \right]^2,$$

où p(E, F) est un coefficient matriciel égal au rapport d'un nombre de documents référencés par une référence annotée contenant la première étiquette E et aussi référencés par une référence annotée contenant la deuxième étiquette F et pour lesquels documents l'identificateur (IU) du premier usager appartient à la liste d'inclusion (LIN) de la deuxième étiquette, sur un nombre de documents ayant une référence annotée contenant la première étiquette E, et EG est l'ensemble de toutes les premières étiquettes G créées par le premier usager (U) pour lesquelles $p(E,G) \neq 0$.

7. Système conforme à la revendication 6, dans lequel le facteur d'évaluation EVAL(E, F) dépend du produit :

$$- a5 * r(E, F),$$

dans lequel a5 est un coefficient au plus égal à 1 et r(G, F) est un coefficient matriciel du type :

$$r(E, F) = \sum_{G \in EG} \frac{x(G, F) * p(E, G)}{\sum_{G \in EG} p(E, G)} .$$

8. Système conforme à la revendication 6 ou 7, dans lequel le facteur d'évaluation EVAL(E, F) dépend du produit :

$$- a6 * d(E),$$

dans lequel a6 est un coefficient au plus égal à 1 et d(E) est un coefficient matriciel du type :

$$d(E) = \sum_{G \in EG} \frac{x(E, G)}{card(G)}$$

où card(G) est le nombre de premières étiquettes appartenant à l'ensemble EG.

9. Système conforme à l'une quelconque des revendications 3 à 8, dans lequel le moyen pour déterminer (MDF, BF) impose partiellement les valeurs de coefficients au plus égaux à 1.

10. Système conforme à l'une quelconque des revendications 3 à 9, dans lequel un usager (U) sélectionne depuis son terminal (TU) au moins la valeur de l'un de coefficients au plus égaux à 1.

11. Système conforme à l'une quelconque des revendications 1 à 10, dans lequel le moyen pour établir (SCP) crée à la demande d'un usager (U) depuis son terminal (TU), une référence (RAD) qui est associée à un document prédéterminé (D) et qui contient une étiquette spéciale (ES) qui indique une suppression de consultation de références annotées du document prédéterminé par l'usager.

12. Système conforme à l'une quelconque des revendications 1 à 11, dans lequel les propositions pour le premier usager (U) et incluant des étiquettes créées par le premier usager (U) sont présentées selon l'ordre décroissant des facteurs d'intérêt (INP) des propositions dans le terminal (TU) du premier usager en réponse à une demande de celui-ci au moyen pour établir (SCP), afin d'inclure l'identificateur (IV) du deuxième usager dans la liste d'inclusion (LIN) d'au moins une étiquette dans une proposition présentée.

13. Système conforme à l'une quelconque des revendications 1 à 12, dans lequel des propositions contenant l'identificateur (IU) du premier usager sont présentées selon l'ordre décroissant des facteurs d'intérêt (INP) des propositions en association respectivement avec les identificateurs (IV) de deuxièmes usagers (V) ayant créés des deuxièmes étiquettes, dans le terminal (TU) du premier usager en réponse à une demande de celui-ci au moyen pour établir (SCP), afin que l'identificateur (IU) du premier usager soit ajouté dans la liste d'inclusion (LIN) d'au moins une première étiquette (E) contenue dans une proposition présentée.

14. Système conforme à l'une quelconque des revendications 1 à 13, dans lequel le moyen pour établir (SCP) établit périodiquement les propositions pour tous les usagers ayant créé chacun au moins une référence annotée.

15. Système conforme à l'une quelconque des revendications 1 à 14, dans lequel chaque étiquette comprend une liste d'exclusion d'usager (LEX) contenant des identificateurs d'usagers qui ne sont pas autorisés à lire l'étiquette.

16. Système conforme à l'une quelconque des revendications 1 à 15, dans lequel chaque étiquette (E) dans le moyen

pour mémoriser (SGBD) est associée à un indicateur (PU/PR) ayant un premier état (PU) qui autorise n'importe quel usager à ajouter son identificateur dans la liste d'inclusion (LIN) de l'étiquette, et un deuxième état (PR) qui n'autorise que l'usager (U) ayant créé l'étiquette (E) à modifier la liste d'inclusion de l'étiquette.

**17.** Système conforme à l'une quelconque des revendications 1 à 16, dans lequel le moyen pour établir est un serveur de contrôle (SCP) contenant le moyen pour déterminer (MDF, BF), et le moyen pour mémoriser est un serveur de gestion de base de données (SGBD) , le serveur de contrôle et le serveur de gestion de base de données étant en communication avec les terminaux d'usager (TU, TV) à travers un troisième serveur (SCO).

FIG. 1

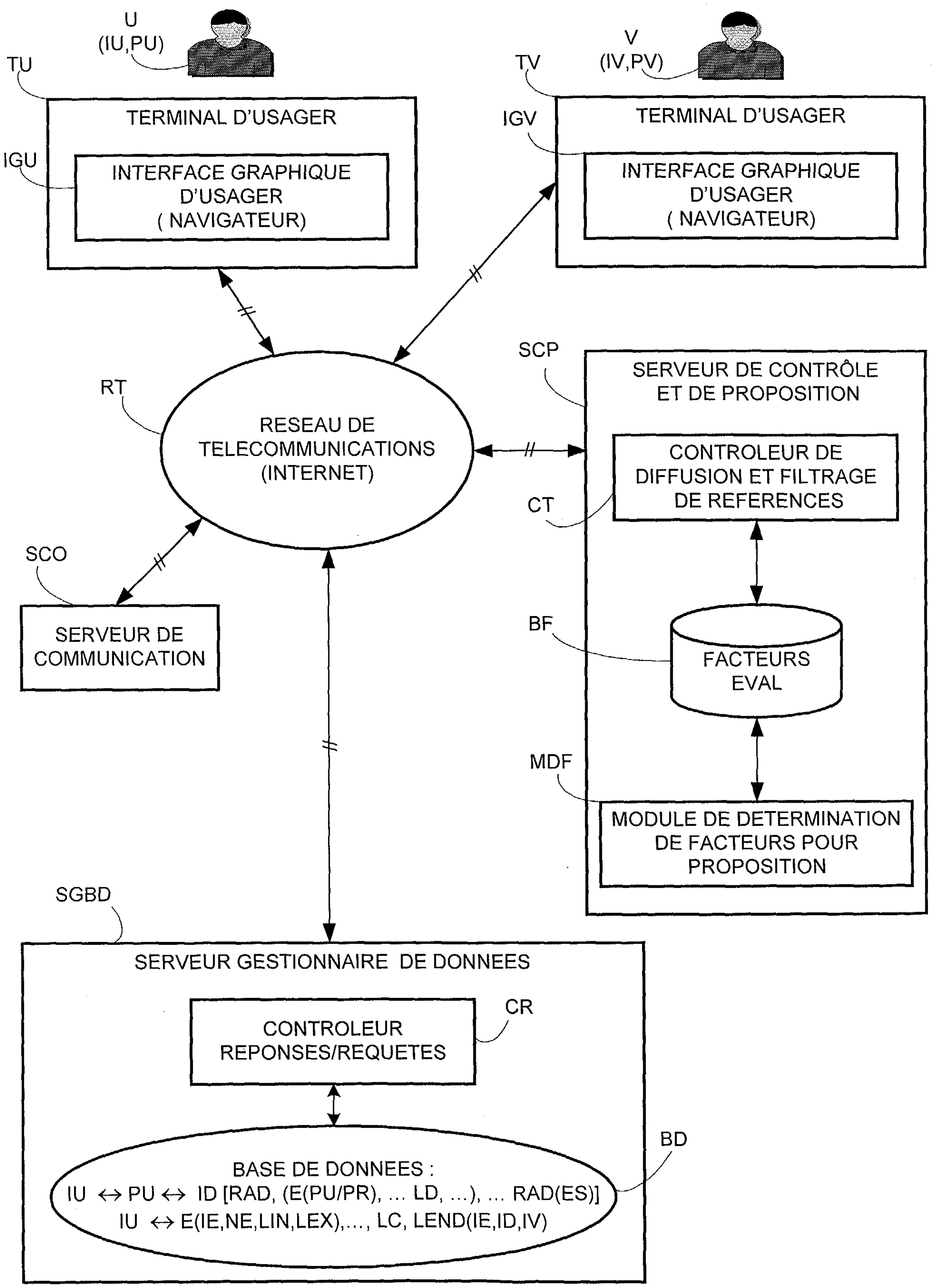
U
(IU,PU)
TU
V
(IV,PV)
TV
TERMINAL D'USAGER
IGU
INTERFACE GRAPHIQUE D'USAGER ( NAVIGATEUR)
TERMINAL D'USAGER
IGV
INTERFACE GRAPHIQUE D'USAGER ( NAVIGATEUR)
SCP
SERVEUR DE CONTRÔLE ET DE PROPOSITION
RT
RESEAU DE TELECOMMUNICATIONS (INTERNET)
CONTROLEUR DE DIFFUSION ET FILTRAGE DE REFERENCES
CT
SCO
BF
FACTEURS EVAL
SERVEUR DE COMMUNICATION
MDF
MODULE DE DETERMINATION DE FACTEURS POUR PROPOSITION
SGBD
SERVEUR GESTIONNAIRE DE DONNEES
CR
CONTROLEUR REPONSES/REQUETES
BD
BASE DE DONNEES :
IU ↔ PU ↔ ID [RAD, (E(PU/PR), ... LD, ...), ... RAD(ES)]
IU ↔ E(IE,NE,LIN,LEX),..., LC, LEND(IE,ID,IV)

FIG.2

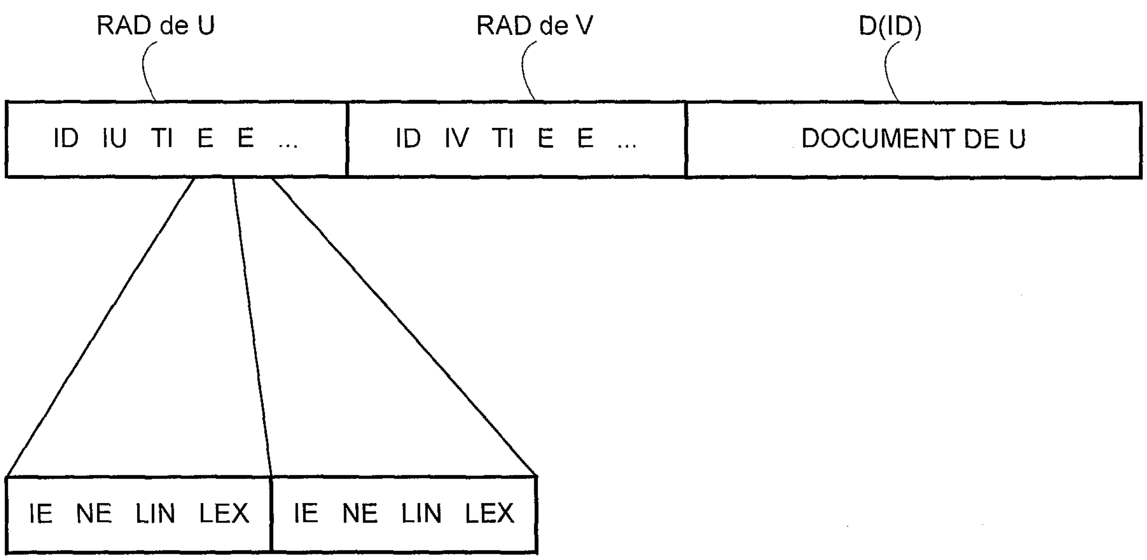
RAD de U
RAD de V
D(ID)
ID IU TI E E ...
ID IV TI E E ...
DOCUMENT DE U
IE NE LIN LEX
IE NE LIN LEX

FIG. 3

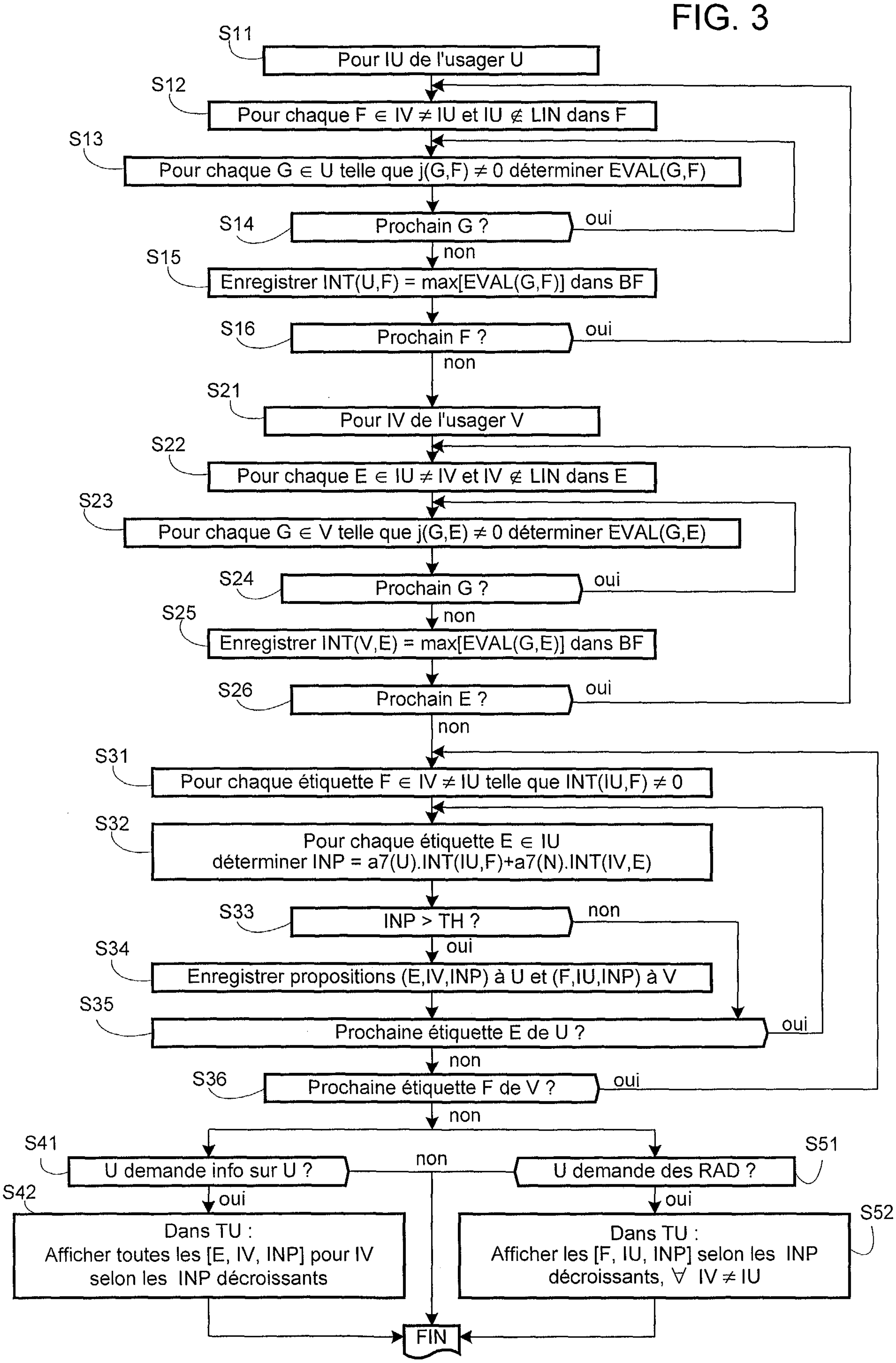
S11
Pour IU de l'usager U
S12
Pour chaque F ∈ IV ≠ IU et IU ∉ LIN dans F
S13
Pour chaque G ∈ U telle que j(G,F) ≠ 0 déterminer EVAL(G,F)
S14
Prochain G ?
oui
non
S15
Enregistrer INT(U,F) = max[EVAL(G,F)] dans BF
S16
Prochain F ?
oui
non
S21
Pour IV de l'usager V
S22
Pour chaque E ∈ IU ≠ IV et IV ∉ LIN dans E
S23
Pour chaque G ∈ V telle que j(G,E) ≠ 0 déterminer EVAL(G,E)
S24
Prochain G ?
oui
non
S25
Enregistrer INT(V,E) = max[EVAL(G,E)] dans BF
S26
Prochain E ?
oui
non
S31
Pour chaque étiquette F ∈ IV ≠ IU telle que INT(IU,F) ≠ 0
S32
Pour chaque étiquette E ∈ IU
déterminer INP = a7(U).INT(IU,F)+a7(N).INT(IV,E)
S33
INP > TH ?
non
oui
S34
Enregistrer propositions (E,IV,INP) à U et (F,IU,INP) à V
S35
Prochaine étiquette E de U ?
oui
non
S36
Prochaine étiquette F de V ?
oui
non
S41
U demande info sur U ?
non
S51
U demande des RAD ?
S42
oui
oui
S52
Dans TU :
Afficher toutes les [E, IV, INP] pour IV
selon les INP décroissants
Dans TU :
Afficher les [F, IU, INP] selon les INP
décroissants, ∀ IV ≠ IU
FIN

Office européen des brevets

# RAPPORT DE RECHERCHE EUROPEENNE

Numéro de la demande
EP 03 29 2227

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | LI W-S ET AL: "PowerBookmarks: a system for personalizable Web information organization, sharing, and management" COMPUTER NETWORKS, ELSEVIER SCIENCE PUBLISHERS B.V., AMSTERDAM, NL, vol. 31, no. 11-16, 17 mai 1999 (1999-05-17), pages 1375-1389, XP004304561 ISSN: 1389-1286 * abrégé * * page 1378, colonne de gauche, ligne 16 - page 1378, colonne de droite, ligne 9 * * page 1379, colonne de gauche, ligne 7 - page 1379, colonne de droite, ligne 18 * * page 1383, colonne de gauche, ligne 25 - page 1385, colonne de gauche, ligne 16 * --- | 1-17 | G06F17/30 |
| A | US 6 041 311 A (CHISLENKO ALEXANDER ET AL) 21 mars 2000 (2000-03-21) * abrégé * * colonne 5, ligne 29 - colonne 6, ligne 22 * * colonne 10, ligne 65 - colonne 11, ligne 34 * --- -/-- | 1-17 | DOMAINES TECHNIQUES RECHERCHES (Int.Cl.7) G06F |

Le présent rapport a été établi pour toutes les revendications

| Lieu de la recherche | Date d'achèvement de la recherche | Examinateur |
|---|---|---|
| LA HAYE | 9 février 2004 | Boyadzhiev, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 03 29 2227

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FUNAKOSHI K ET AL: "A content-based collaborative recommender system with detailed use of evaluations" KNOWLEDGE-BASED INTELLIGENT ENGINEERING SYSTEMS AND ALLIED TECHNOLOGIES, 2000. PROCEEDINGS. FOURTH INTERNATIONAL CONFERENCE ON BRIGHTON, UK 30 AUG.-1 SEPT. 2000, PISCATAWAY, NJ, USA,IEEE, US, 30 août 2000 (2000-08-30), pages 253-256, XP010523105 ISBN: 0-7803-6400-7 * abrégé * * page 254, colonne de gauche, ligne 9 - page 255, colonne de gauche, ligne 38 * --- | 1-17 | |
| A | RESNICK P ET AL: "GROUPLENS: AN OPEN ARCHITECTURE FOR COLLABORATIVE FILTERING OF NETNEWS" PROCEEDINGS OF CONFERENCE ON COMPUTER-SUPPORTED COOPERATIVE WORK, 7-10 OCT. 1990, LOS ANGELES, NEW YORK, NY, US, 22 octobre 1994 (1994-10-22), pages 175-186, XP000601284 * abrégé * * page 176, colonne de gauche, ligne 10 - page 176, colonne de gauche, ligne 27 * * page 180, colonne de droite, ligne 38 - page 181, colonne de droite, ligne 10 * ----- | 1-17 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 9 février 2004 | Boyadzhiev, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 03 29 2227

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2004

| Document brevet cité au rapport de recherche | Date de publication | Membre(s) de la famille de brevet(s) | Date de publication |
|---|---|---|---|
| US 6041311 A | 21-03-2000 | AU 6041898 A | 18-08-1998 |
| | | WO 9833135 A1 | 30-07-1998 |
| | | AU 6282596 A | 05-02-1997 |
| | | CA 2225790 A1 | 23-01-1997 |
| | | EP 0751471 A1 | 02-01-1997 |
| | | JP 11509019 T | 03-08-1999 |
| | | WO 9702537 A1 | 23-01-1997 |
| | | US 6049777 A | 11-04-2000 |
| | | US 6092049 A | 18-07-2000 |
| | | US 6112186 A | 29-08-2000 |
| | | US 5872850 A | 16-02-1999 |

EPO FORM P0460

Pour tout renseignement concernant cette annexe : voir Journal Officiel de l'Office européen des brevets, No.12/82